Europäisches Patentamt

European Patent Office

Office européen des brevets

(19)

(11) Publication number : **0 542 267 B1**

(12) **EUROPEAN PATENT SPECIFICATION**

(45) Date of publication of patent specification :
26.07.95 Bulletin 95/30

(51) Int. Cl.⁶ : **H04N 5/217, H04N 5/335**

(21) Application number : 92119373.6

(22) Date of filing : 12.11.92

(54) **Image scanner.**

(30) Priority : **14.11.91 JP 298732/91**
**02.11.92 JP 294327/92**

(43) Date of publication of application :
**19.05.93 Bulletin 93/20**

(45) Publication of the grant of the patent :
**26.07.95 Bulletin 95/30**

(84) Designated Contracting States :
**DE FR GB**

(56) References cited :
**EP-A- 0 398 268**
**US-A- 4 541 116**
**US-A- 4 860 118**

(73) Proprietor : **SHARP KABUSHIKI KAISHA**
**22-22 Nagaike-cho**
**Abeno-ku**
**Osaka 545 (JP)**

(72) Inventor : **Nagano, Fumikazu**
**46-13 Izumihara-cho**
**Yamato-Koriyama-shi, Nara-ken (JP)**

(74) Representative : **TER MEER - MÜLLER -**
**STEINMEISTER & PARTNER**
**Mauerkircherstrasse 45**
**D-81679 München (DE)**

## Description

## BACKGROUND OF THE INVENTION

### 1. Field of the Invention

The present invention relates to an image scanner comprising an image sensor for individually issuing outputs of photo detectors arranged in odd numbered rows and outputs of photo detectors arranged in even numbered rows and correcting means for correcting an output issued from a photo detector representing a density of a pixel of interest according to a level difference between said issued output and an output issued from at least one of adjacent photo detectors disposed on rows adjacent to a row on which said photo detector representing density of said pixel of interest is disposed.

Such an image scanner is known from US-A-4-860118.

### 1. Description of the Related Art

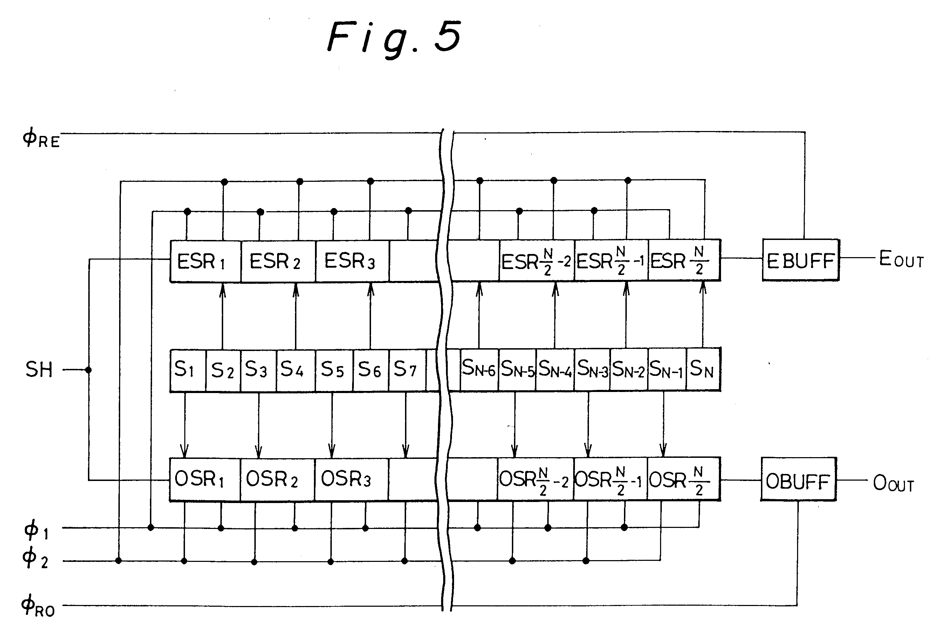

Fig. 5 schematically shows an ordinary CCD image sensor. In Fig. 5, $S_1$, $S_2$,....,$S_N$ denote photo detectors $OSR_1$, $OSR_2$..., $OSR_{N/2}$ denote odd-number-side shift registers for shifting out analog outputs of the photo detectors on the odd number side (photo detectors arranged in the odd number rows), $ESR_1$, $ESR_2$, ...., $ESR_{N/2}$ denote the even-number-side shift registers for shifting out analog outputs of the photo detectors on the even number side (photo detectors arranges in the even numbered rows), OBUFF denotes an odd-number-side buffer amplifier, and EBUFF denotes an even-number-side buffer amplifier. And, SH denotes a start pulse for starting the shifting operation of the shift registers, $\Phi_1$ and $\Phi_2$ denote transfer pulses, $\Phi_{RE}$ and $\Phi_{RO}$ denote reset pulses, $O_{out}$ denotes CCD output of the odd-number-side photo detectors, and $E_{OUT}$ denotes CCD output of the even-number-side photo detectors.

In the conventional image scanner having a CCD image sensor for individually supplying outputs of the photo detectors on the odd number side, and outputs of the photo detectors on the even number side through an odd-number-side buffer amplifier and an even-number-side buffer amplifier, respectively, there is a problem that variations occur in CCD output caused, for example, by differences in the characteristics of the like of the buffer amplifiers.

The known image scanner disclosed in US-A-4 860 118 includes correcting means using a correction in an edge emphasis processing. That correction signal is preferrably formed on the basis image signals of pixels near the particular pixel of interest. A multiplier is used to increase or decrease a magnitude of a main scanning edge emphasis signal. A ROM receives as its address signal an output from a rotary encoder for setting a main scanning magnification in percentage and outputs a corresponding main scanning edge emphasis signal multiplication coefficient. A multiplier is used to increase or decrease a magnitude of a sub-scanning edge emphasis signal. A second ROM receives as its address signal an output from a second rotary encoder for setting a sub-scanning magnification in percentage and outputs a corresponding sub-scanning edge emphasis signal multiplication coefficient. A coefficient ROM is arranged to prevent white or black stripes generated by reduction in the main scanning direction and to prevent aerial over-emphasis of pixel density variations due to enlargement. To avoid drawbacks, which may occur as a result of a combination of variable magnification processing and emphasis processing, the known image processing system uses a coefficient ROM in combination with smoothing filters.

The use or non-use of the filters are set by a filter control circuit in accordance with main scanning magnifications. The known image processing apparatus is a very sophisticated and complicated system, which may require a large amount of hardware/software processing.

## SUMMARY OF THE INVENTION

The present invention has been made with the above problem in mind, and has as an object to provide an image scanner preventing variations in output.

The above object is solved according to the invention, by an image scanner according to the preamble of Claim 1, which is characterized in that correcting means corrects a density $D_{OUTn}$ of a pixel of interest according to the following formula:

$$D_{OUTn} = CD_n/(1 - 2\alpha) - (CD_{n-1} + CD_{n+1})\alpha/(1 - 2\alpha)$$

wherein $CD_n$ represents a density of a pixel of interest, $CD_{n-1}$ and $CD_{n+1}$ represent densities of adjacent pixels, and $\alpha$ is a functiton of an absolute value of the difference between $CD_n$ and $1/2(CD_{n-1} + CD_{n+1})$, or a function of an absolute value of the difference between $CD_n$ and $CD_{n-1}$, or a function of an absolute value of the dif-

ference between $CD_n$ and $CD_{n+1}$.

Further objects and advantages of the present invention will be apparent from the following description of the preferred embodiments of the invention as illustrated in the accompanying drawings.

## BRIEF DESCRIPTION OF THE DRAWINGS

Fig. 1 is a block diagram of an embodiment of the image scanner according to the present invention;

Fig. 2 is a diagram showing waveforms of the various parts of the image scanner in Fig. 1;

Fig. 3 is a graph showing coefficients which determine the blur and image-edge accentuation characteristics of the image scanner in Fig. 1;

Fig. 4 is diagram comparing output of the image scanner in Fig. 1 and output of the prior-art image scanner.

Fig. 5 is a block diagram of the prior-art CCD image scanner; and

Fig. 6 is a block diagram of another emobdiment of the image scanner according to the present invention.

## DETAILED DESCRIPTION OF THE PREFERRED EMBODIMENTS

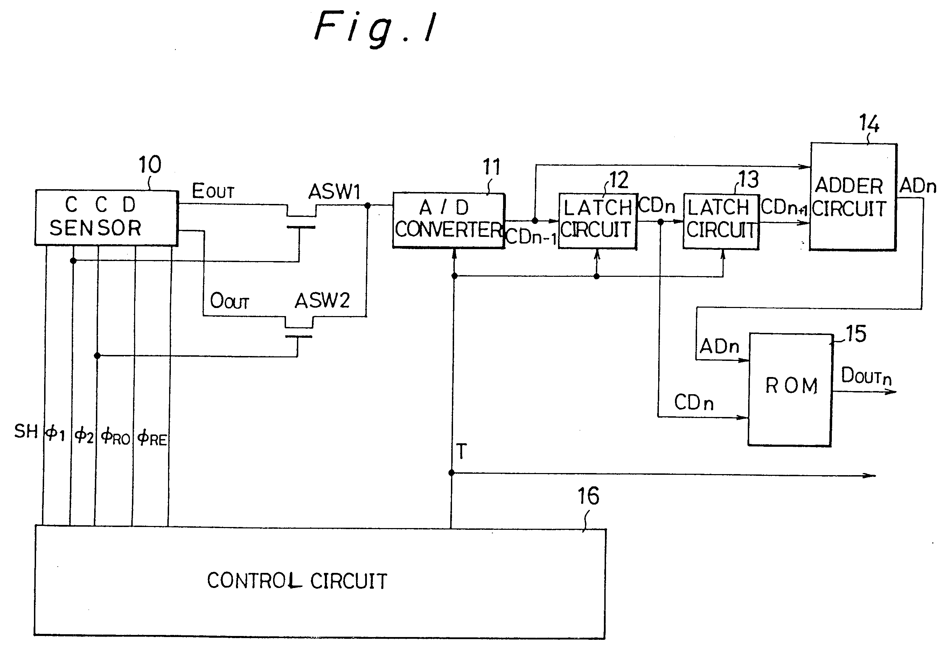

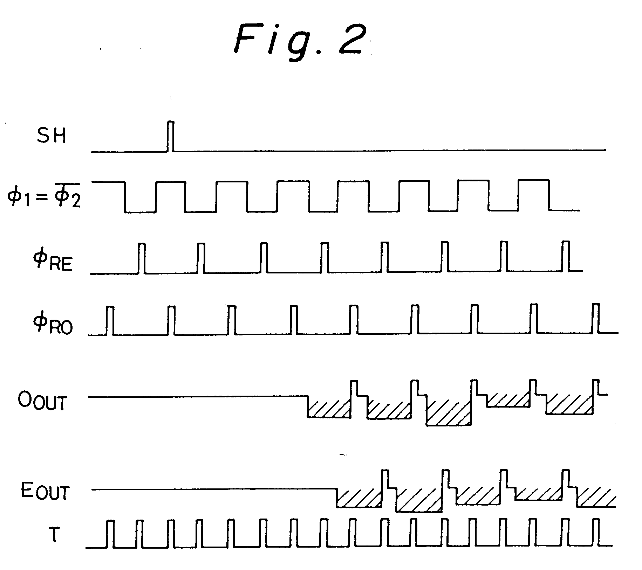

Fig. 1 is a block diagram of the image scanner as an embodiement of the present invention. In Fig. 1, reference numeral 10 denotes a CCD image sensor shown in Fig. 5, and ASW1 and ASW2 denote analog switches for synthesizing CCD output of the odd-number-side photo detectors and CCD output of the even-number-side photo detectors. The analog switches ASW1 and ASW2 conduct a current respectively when the high level of transfer pulses $\phi_1$ and $\phi_2$ are applied thereto. Reference numeral 11 denotes an A/D converter which sequentially converts CCD output, received through the analog switches ASW1 and ASW2, into 8-bit digital signals $CD_1$, $CD_2$, ..., $CD_{n-1}$, $CD_n$, $CD_{n+1}$ at the leading edge of a timing clock signal T supplied from a control circuit 16. The 8-bit digital signals represent density levels of the pixels in a range of 0, 1, 2, ..., 255, in which 0 corresponds to the level of black, while 255 corresponds to the level of white. Reference numerals 12 and 13 denote latch circuits for latching output of the A/D converter 11 at the leading edge of a timing clock signal T. Reference numeral 14 denotes an adder circuit for adding output $CD_{n+1}$ of the latch circuit 13 and output $CD_{n-1}$ of the A/D converter 11, and 15 denotes a ROM (read only memory) arranged to receive output $AD_n$ ( $= 1/2$ $(CD_{n-1} + CD_{n+1})$) of the adder circuit 14 and output $CD_n$ of the latch circuit 12 as a 16-bit address, and output 8-bit data $D_{OUTn}$ corresponding to the address. Fig. 2 shows waveforms of signals at various parts of the above-mentioned image scanner. Output $D_{OUTn}$ from ROM 15 can be expressed by the following equation.

$$D_{OUTn} = CD_n/(1 - 2\alpha) - 2\alpha AD_n/(1 - 2\alpha)$$
$$= CD_n/(1 - 2\alpha) - (CD_{n-1} + CD_{n+1}) \alpha/(1 - 2\alpha)$$

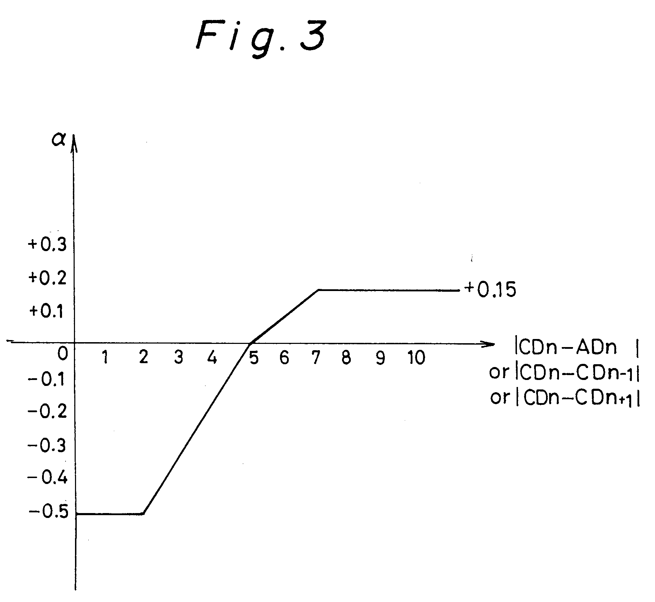

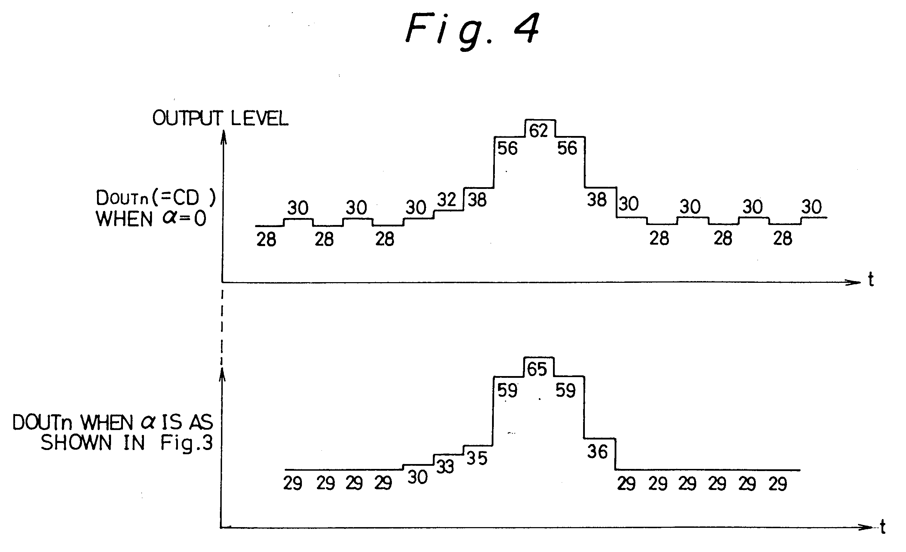

The $\alpha$ is a function of an absolute value of a difference between $CD_n$ and $AD_n$ as shown in the graph in Fig. 3. As it will be understood from this equation that when $\alpha$ is negative, the image is blurred, and when $\alpha$ is positive, the edge of the image is accentuated.

In addition, as is apparent from Fig. 3, in this embodiment, when the difference between the density level of a pixel of interest, i.e. $CD_n$ and the density levels of the adjacent pixels, i.e. $AD_n$ is 2 or less, the image is blurred to the maximum degree. And, when the difference is in the range of 2 to 5, the image is blurred according to the degree of difference. When the difference is 7 or more, the edge of the image is accentuated to the maximum degree, and when the difference is in the range of 5 to 7, the edge of the image is accentuated according to the degree of the difference.

Fig. 4 shows output when $\alpha = 0$, that is, in the case of the prior-art image scanner, and output of the image scanner in this emodiment. From this figure, it can be seen that with the image scanner in this embodiment, variations between the even-number-side output and the odd-number-side output are eliminated, and also, the edge of the image is accentuated. In the image scanner in Fig. 1, $\alpha$ is the function of difference between $CD_n$ and $1/2$ $(CD_{n-1} + CD_{n+1})$, but $\alpha$ may be a function of the difference between $CD_n$ and $CD_{n+1}$ or a function of the difference between $CD_n$ and $CD_{n-1}$.

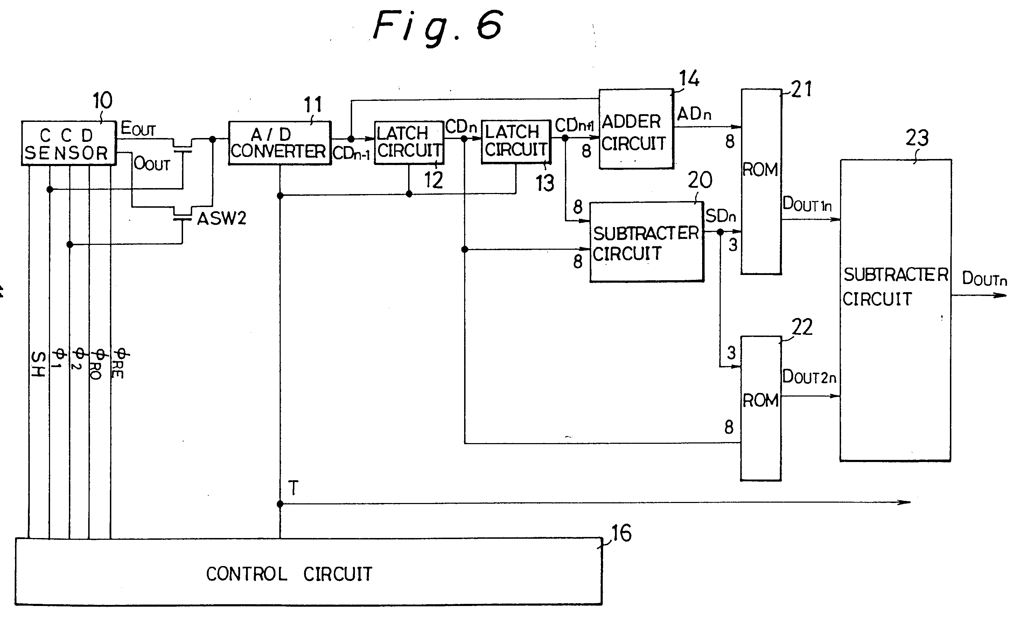

Fig. 6 is a block diagram of another embodiment in which $\alpha$ is a function of a difference between $CD_n$ and $CD_{n+1}$. In Fig. 6, the component elements whose function is the same as the component elements of the image scanner in Fig. 1 are designated by the same codes.

The composition of the image scanner of this embodiment differs from that of the image scanner in Fig. 1 in that subtracter circuits 20 and 23 are added and ROM 21 and ROM 22 are used in place of ROM 15.

In Fig. 6,

$$AD_n = 1/2 (CD_{n-1} + CD_{n+1})$$
$$SD_n = |CD_n - CD_{n+1}|$$
$$D_{OUT1n} = 2\alpha AD_n/(1 - 2\alpha)$$
$$D_{OUT2n} = CD_n/(1 - 2\alpha)$$

$$D_{OUTn} = D_{OUT2n} - D_{OUT1n} = CD_n/(1 - 2\alpha) - (CD_{n-1} + CD_{n+1})\alpha/(1 - 2\alpha)$$

In the above equations, $AD_n$, $CD_n$, $D_{OUT1n}$, $D_{OUT2n}$, $D_{OUTn}$ are 8-bits signals, but $SD_n = |CD_n - CD_{n+1}|$ is a 3-bit signal representing a value corresponding to a difference between $CD_n$ and $CD_{n+1}$. If the three bits are designated by $SD_{on}$, $SD_{1n}$, and $SD_{2n}$, the relation of the difference between $CD_n$ and $CD_{n+1}$ with the values of those bits are as shown in the following table.

| Difference between $CD_n$ and $CD_{n+1}$ | 0 | 1 | 2 | 3 | 4 | 5 | 6 | 7 | 8 | 9 | . . . | 255 |
|---|---|---|---|---|---|---|---|---|---|---|---|---|
| $SD_{0n} + SD_{1n} \times 2 + SD_{2n} \times 4$ | 0 | 1 | 2 | 3 | 4 | 5 | 6 | 7 | 7 | 7 | . . . | 7 |

The image scanner in Fig. 6 can use a ROM with smaller capacity than the one in Fig. 1. For example, ROM 15 in Fig. 1 must have 16 address terminals, but ROM 21 and ROM 22 in Fig. 6 need to have only 11 address terminals.

As the sensor of the image scanner in the present invention, various types of sensors, other than the CCD type, such as one using a photodiode array, may be used.

## Claims

1. An image scanner comprising an image sensor (10) for individually issuing outputs ($O_{out}$) of photo detectors arranged in odd numbered rows and outputs ($E_{out}$) of photo detectors arranged in even numbered rows and correcting means ( 14,15,20,21,22,23 ) for correcting an output ($CD_n$) issued from a photo detector representing a density of a pixel of interest according to a level difference between said issued output and an output ($CD_{n-1}$, $CD_{n+1}$) issued from at least one of adjacent photo detectors disposed on rows adjacent to a row on which said photo detector representing density of said pixel of interest is disposed, characterized in that said correcting means corrects a density $D_{OUTn}$ of a pixel of interest according to the following formula:

$$D_{OUTn} = CD_n/(1 - 2\alpha) - (CD_{n-1} + CD_{n+1})\alpha/(1 - 2\alpha)$$

wherein $CD_n$ represents a density of a pixel of interest, $CD_{n-1}$ and $CD_{n+1}$ represent densities of adjacent pixels, and $\alpha$ is a function of an absolute value of the difference between $CD_n$ and $1/2(CD_{n-1} + CD_{n+1})$, or a function of an absolute value of the difference between $CD_n$ and $CD_{n-1}$, or a function of an absolute value of the difference between $CD_n$ and $CD_{n+1}$.

## Patentansprüche

1. Bildabtaster, mit einem Bildsensor (10) zum individuellen Ausgeben von Ausgangssignalen ($O_{out}$) von in ungerade numerierten Zeilen angeordneten Photodetektoren und von Ausgangssignalen ($E_{out}$) von in gerade numerierten Zeilen angeordneten Photodetektoren, sowie mit einer Korrektureinrichtung (14, 15, 20, 21. 22, 23) zum Korrigieren eines von einem Photodetektor abgegebenen und eine Dichte eines Interessierenden Pixels repräsentierenden Ausgangssignals ($CD_n$) entsprechend einer Pegeldifferenz zwischen dem ausgegebenen Ausgangssignal und einem von mindestens einem der angrenzenden Photodetektoren abgegebenen Ausgangssignal ($CD_{n-1}$, $CD_{n+1}$), welcher angrenzende Photodetektor in an eine Zeile, in der der die Dichte des interessierenden Pixels repräsentierende Photodetektor angeordnet ist, angrenzenden Zeilen angeordnet ist, **dadurch gekennzeichnet,** daß die Korrektureinrichtung eine Dichte $D_{OUTn}$ eines Interessierenden Pixels entsprechend der folgenden Formel korrigiert:

$$D_{OUTn} = CD_n/(1 - 2\alpha) - (CD_{n-1} + CD_{n+1})\alpha/(1 - 2\alpha)$$

wobei $CD_n$ eine Dichte eines interessierenden Pixels repräsentiert, $CD_{n-1}$ und $CD_{n+1}$ Dichten von angrenzenden Pixeln repräsentieren, und $\alpha$ eine Funktion eines Absolutwerts der Differenz zwischen $CD_n$ und $1/2(CD_{n-1} + CD_{n+1})$ oder eine Funktion eines Absolutwerts der Differenz zwischen $CD_n$ und $CD_{n-1}$ oder eine Funktion eines Absolutwerts der Differenz zwischen $CD_n$ und $CD_{n+1}$ ist.

4

**Revendications**

1.  Analyseur optique d'image comprenant un détecteur d'image (10) pour délivrer de façon individuelle des sorties ($O_{OUT}$) de photodétecteurs agencés en des rangées numérotées impaires et des sorties ($E_{OUT}$) de photodétecteurs agencés en des rangées numérotées paires et des moyens de correction (14, 15, 20, 21, 22, 23) pour corriger une sortie ($CD_n$) délivrée par un photodétecteur indiquant une densité d'un pixel considéré selon une différence de niveau entre ladite sortie délivrée et une sortie ($CD_{n-1}$, $CD_{n+1}$) délivrée par au moins l'un des photodétecteurs adjacents disposés sur des rangées adjacentes à une rangée sur laquelle est disposé ledit photodétecteur indiquant la densité dudit pixel considéré, caractérisé en ce lesdits moyens de correction corrigent la densité $D_{OUTn}$ du pixel considéré conformément à l'équation suivante:

    $$D_{OUTn} = CD_n/(1 - 2\alpha) - (CD_{n-1} + CD_{n+1})\alpha/(1 - 2\alpha)$$

    dans laquelle $CD_n$ représente la densité du pixel considéré, $CD_{n-1}$ et $CD_{n+1}$ représentent des densités de pixels adjacents, et $\alpha$ est une fonction d'une valeur absolue de la différence entre $CD_n$ et $1/2(CD_{n-1}+CD_{n+1})$, ou est une fonction d'une valeur absolue de la différence entre $CD_n$ et $CD_{n-1}$, ou est une fonction d'une valeur absolue de la différence entre $CD_n$ et $CD_{n+1}$.

Fig.1

EP 0 542 267 B1

Fig. 2

EP 0 542 267 B1

# Fig. 3

# Fig. 4

OUTPUT LEVEL

$\text{D}_{\text{OUT}n}(=\text{CD})$ WHEN $\alpha=0$

28    30    28    30    28    30    32  38    56    62    56    38  30    28    30    28    30    28    30

t

$\text{D}_{\text{OUT}n}$ WHEN $\alpha$ IS AS SHOWN IN Fig.3

29  29  29  29  30  33  35    59    65    59    36  29  29  29  29  29  29

t

EP 0 542 267 B1

# Fig. 5

EP 0 542 267 B1

# Fig. 6

CCD SENSOR 10 — $E_{OUT}$ — $O_{OUT}$ — ASW2

A/D CONVERTER 11 — $CD_{n-1}$

LATCH CIRCUIT 12 — $CD_n$

LATCH CIRCUIT 13 — $CD_{n-1}$

ADDER CIRCUIT 14 — $AD_n$ — 8

ROM 21

SUBTRACTER CIRCUIT 20 — $SD_n$ — 3

ROM 22 — $D_{OUT2n}$

SUBTRACTER CIRCUIT 23 — $D_{OUTn}$

$D_{OUT1n}$

8

8

8

3

3

8

SH  $\phi_1$  $\phi_2$  $\phi_{RO}$  $\phi_{RE}$

T

CONTROL CIRCUIT 16

EP 0 542 267 B1